# EUROPÄISCHE PATENTSCHRIFT

(11) **EP 1 157 085 B1**
(45) Veröffentlichungstag und Bekanntmachung des Hinweises auf die Patenterteilung: **03.11.2004**
(21) Anmeldenummer: 00905006.3
(22) Anmeldetag: 02.02.2000
(51) Int. Cl.: C10G 73/00, A01N 25/08, A01N 25/12, A01N 55/00, A01N 37/00, A01N 63/00, A01N 47/00, A01N 43/00, A01N 53/00, A01N 57/00

(54) **MISCHUNG VON PFLANZENBEHANDLUNGSMITTELN MIT WACHSEN, VERFAHREN ZU DEREN HERSTELLUNG UND DEREN VERWENDUNG**
MIXTURE OF PLANT-TREATMENT AGENTS AND WAXES, METHOD FOR PRODUCING SAME AND THE USE THEREOF
MELANGE D'AGENTS PHYTOSANITAIRES AVEC DES CIRES, PROCEDE PERMETTANT DE LE PREPARER ET SON UTILISATION

(30) Priorität: 17.02.1999 DE 19906491
(43) Veröffentlichungstag der Anmeldung: 28.11.2001
(73) Patentinhaber: Clariant GmbH, 65929 Frankfurt am Main (DE)
(72) Erfinder: EHRHARDT, Heinz, D-86508 Rehling (DE); HEINRICHS, Franz-Leo, D-86456 Gablingen (DE); KUKULA, Karl, D-86678 Ehingen (DE); KAINZ, Hans, Jürgen, D-86356 Neusäss (DE); BESOLD, Bernhard, D-86199 Augsburg (DE)
(86) Internationale Anmeldenummer: PCT/EP2000/000835
(87) Internationale Veröffentlichungsnummer: WO 2000/049107

(56) Entgegenhaltungen:
- EP-A- 0 021 477
- WO-A-95/34200
- DD-A- 214 519
- DD-A- 266 726
- DE-A- 19 829 037
- GB-A- 1 013 441

## Beschreibung

Pflanzenbehandlungsmittel sind Kombinationen aus Wirkstoff bzw. Wirkstoffen und Hilfsstoffen, wie z.B. Lösemittel, Emulgatoren, die eine Anwendung aus wässeriger Phase möglich machen. Sie können zur besseren Wirkungsentfaltung Zusätze wie ölige Kohlenwasserstoffe oder Emulgatorsysteme enthalten (z.B. WO 97/47199). Auch der Zusatz von Wachsen wurde in Kombination mit Fettsäurederivaten, weiterer Inhaltsstoffe oder Mikroverkapselung vorgeschlagen, z.B. WO 95/34200, DE-A-3 334 198, WO 97/27932. Der Nachweis einer verbesserten Wirksamkeit im biologischen Test wurde nicht geführt.

Die DE-A-198 29 037 beschreibt Konservierungsmittel für Holz, bzw. Pflanzen, die Wachse enthalten, welche mit terpenhaltigen Stoffen versetzt sind. Dabei wird die Aufgabe, ein umweltfreundliches effektives Holzkonservierungsmittel zur Verfügung zu stellen, dadurch gelöst, indem eine hydrophobierende Wachmischung, bestehend aus einem harten amorphen Material mit guter Wasserlöslichkeit in organischen Lösungsmitteln bereits bei niedrigen Temperaturen, bereitgestellt wird.

Die DD-A-214 519 beschreibt mineralölfreie Tankmischungen, welche Wachse enthalten, die mit harzigen Stoffen und asphaltischen Bestandteilen versetzt sind. Dabei wird die Aufgabe, mineralölfreie Tankmischungen von in Wasser dispergierten Pflanzenschutzmitteln mit verbesserter Wirksamkeit zur Verfügung zu stellen, dadurch gelöst, dass diese Tankmischungen neben den üblichen Hilfsstoffen eine sehr spezielle Montanwachsemulsion, hergestellt durch eine Emulgiertechnik, enthalten.

Die DD-A-266 726 beschreibt Zusatzkomponenten für Wachemulsionen zum verbesserten Anwachsen von Jungpflanzen, wobei diese Wachsemulsion mit speziellen Fettsäuregemischen und geringen Bestandteilen an Triäthanolamin versetzt sein müssen. Hier wird die Aufgabe, eine Kombination von Zusatzkomponenten für Montan-wachsemulsionen zur Förderung des Anwachsens von Jungpflanzen zur Verfügung zu stellen dadurch gelöst, dass eine Montanwachsschmelze, die Montanharze, Fettsäuren, Hydroxybenzoesäuremethylester, Hydroxybenzoesäurepropylester und Triäthanolamin enthält, eingesetzt wird.

WO-A-95/34200 beschreibt eine Zusammensetzung von biologisch oder chemisch aktiven Substanzen, die auf einer Trägermatrix integriert sind. Hierbei wird die Aufgabe, biologisch abbaubare Verbindungen effektiv einsetzen zu können, dadurch gelöst, dass-diese Verbindungen auf einer Trägermatrix integriert werden.

Es besteht daher Bedarf, insbesondere auch unter dem Aspekt eines reduzierten Eintrags an Stoffen in die Umwelt, an Zusätzen für Pflanzenbehandlungsmittel, die deren Wirkung modifizieren.

Somit bestand die Aufgabe, Pflanzenbehandlungsmittel so zu modifizieren, daß sie ihre volle Wirkung entfalten, ohne daß schädliche Stoffe in die Umwelt eingetragen werden.

Es wurde nun überraschenderweise gefunden, daß Mischungen von Pflanzenbehandlungsmitteln mit einem oder mehreren Wachsen erhebliche Vorteile gegenüber den nicht wachshaltigen Produkten bieten.

Gegenstand der Erfindung sind somit Mischungen von Pflanzenbehandlungsmitteln mit einem oder mehreren Wachsen, wobei diese Wachse durch eine Säurezahl von 0 - 200 und eine Viskosität von 5 mPas (bei 100°C) bis 30000 mPas (bei 140°C) charakterisiert sind.

Man kann, falls gewünscht, durch diese Mischungen von Pflanzenbehandlungsmitteln mit Wachsen
- die Flüchtigkeit von Wirkstoffen reduzieren
- die Anwendertoxizität reduzieren
- die phytotoxischen Effekte der Wirkstoffe bzw. der Formulierung reduzieren
- eine Erhöhung der Wirkungssicherheit erreichen
- die Regenbeständigkeit des Films erhöhen
- eine langsame Freisetzung des Wirkstoffs erreichen.
- Verdunstungsschutz bei low volume (bzw. ultra low volume) - Applikation bewirken.

Je nach gewünschtem Effekt ist es dadurch möglich, die Wirkstoffmengen zu reduzieren oder die Spritzintervalle zu verlängern oder die Anzahl der Behandlungen zu reduzieren oder die phytotoxischen Wirkungen zugunsten der gewünschten Wirkung zu reduzieren.

Gut geeignet sind Mischungen, in denen die Wachse eine Säurezahl von 0 - 150, insbesondere von 5 - 150, und eine Viskosität von 5 mPas (bei 100 °C) bis 2000 mPas (bei 170 °C), insbesondere von 5 bis 300 mPas (bei 100°C), haben.

Ganz besonders bevorzugt sind Mischungen, in denen die Wachse eine Säurezahl von 15 - 60 und eine Viskosität von 150 - 5000 mPas (bei 140°C) aufweisen.

Die Mischungen enthalten im allgemeinen 0,01 bis 95, vorzugsweise 1 bis 95 Gew.-% Wachs und 5 bis 99,99, vorzugsweise 5 bis 99 Gew.-% Pflanzenbehandlungs-mittel.

Unter Pflanzenbehandlungsmittel sind alle Wirkstoffe und deren Formulierung zu verstehen, die als Insektizide, Fungizide, Herbizide und Beizmittel eingesetzt werden. Im einzelnen seien genannt:
1. aus der Gruppe der Phosphorverbindungen
   Acephate, Azamethiphos, Azinphos-ethyl, Azinphosmethyl, Bromophos, Bromophos-ethyl, Cadusafos (F-67825), Chlorethoxyphos, Chlorfenvinphos, Chlormephos, Chlorpyrifos, Chlorpyrifos-methyl, Demeton, Demeton-S-methyl, Demeton-S-methyl sulfphone, Dialifos, Diazinon, Dichlorphos, Dimethoate, Disulfoton, EPN, Ethion, Ethoprophos, Etrimfos, Famphur, Fenamiphos, Fenitrothion, Fensulfothion, Fenthion, Fonofos, Formothion, Fosthiazate (ASC-66824) Heptenophos, Isozophos, Isothioate, Isoxathion, Malathion, Methacrifos, Methamidophos, Methidathion, Salithion, Mevinphos, Monocrotophos, Naled, Omethoate, Oxydemeton-methyl, Parathion, Parathion-methyl, Phenthoate, Phorate, Phosalone, Phosfolan, Phosphocarb (BAS-301), Phosmet, Phosphamidon, Phoxim, Pirimiphos, Pirimiphos-ethyl, Pirimiphos-methyl, Profenofos, Propaphos, Proetamphos, Prothiofos, Pyraclofos, Pyridaphenthion, Quinalphos, Sulprofos, Temephos, Terbufos, Tebupirimfos, Tetrachlorvinphos, Thiodemeton, Triazophos, Trichlorphon, Vamidothion;
2. aus der Gruppe der Carbamate
   Alanycarb (OK-135), Aldicarb, 2-sec.-Butylphenylmethylcarbamate (BPMC), Carbaryl, Carbofuran, Carbosulfan, Claethocarb, Benfuracarb, Ethiofencarb, Furathiocarb, HCN-801, Isoprocarb, Methomyl, 5-Methyl-m-cumenylbutyryl(methyl)carbamate, Oxamyl, Pirimicarb, Propoxur, Thiodicarb, Thiofanox, 1-Methylthio(ethylideneamino)-N-methyl-N-(morpholinothio)carbamate (UC 51717), Triazamate
3. aus der Gruppe der Carbonsäureester
   Acrinathrin, Allethrin, Alphametrin, Beta-Cypermethrin, 5-Benzyl-3-furylmethyl(E),
   -(1R)-cis-2,2-di-methyl-3-(2-oxothiolan-3-ylidenemethyl)cyclopropanecarboxylate, Beta-Cyfluthrin, Beta-Cypermethrin, Bioallethrin, Bioallethrin((S)-cyclopentylisomer), Bioresmethrin, Bifenthrin, (RS)-1-Cyano-1-(6-phenoxy-2-pyridyl)methyl-(1RS)-trans-3-(4-tert.butylphenyl)-2,2-dimethylcyclopropanecarboxylate (NCl 85193), Cycloprothrin, Cyfluthrin, Cyhalothrin, Cythrin, Cypermethrin, Cyphenothrin, Deltamethrin, Empenthrin, Esfenvalerate, Fenfluthrin, Fenpropathrin, Fenvalerate, Flucythrinate, Flumethrin, Fluvalinate ((D)-Isomer), Imiprothrin (S-41311), Lambda-Cyhalothrin, Permethrin, Phenothrin ((R)-Isomer), Prallethrin, Pyrethrine (natürliche Produkte), Resmethrin, Tefluthrin, Tetramethrin, Theta-Cypermethrin (TD-2344), Tralomethrin, Transfluthrin, Zeta-Cypermethrin (F-56701);
4. aus der Gruppe der Amidine
   Amitraz, Chlordimeform;
5. aus der Gruppe der Zinnverbindungen
   Cyhexatin, Fenbutatinoxide;
6. Sonstige
   Abamectin, ABG-9008, Acetamiprid, AKD-1022, AKD-3059, ANS-118, Bacillus thuringiensis, Beauveria bassiana, Bensultap, Bifenazate (D-2341), Binapacryl, BJL-932, Bromopropylate, BTG-504, BTG-505, Buprofezin, Camphechlor, Cartap, Chlorobenzilate, Chlorfenapyr, Chlorfluazuron, 2-(4-Chlorphenyl)-4,5-diphenylthiophen (UBI-T 930), Chlorfentezine, Chromafenozide (ANS-118), CG-216, CG-217, CG-234, A-184699, Cyclopropancarbonsäure-(2-naphthylmethyl)ester (Ro12-04770), Cyromazin, Diacloden (Thiamethoxam), Diafenthiuron, N-(3,5-Dichlor-4-(1,1,2,3,3,3-hexafluor-1-propyloxy) phenyl)carbamoyl)-2-chlorbenzcarboximidsäureethylester, DDT, Dicofol, Diflubenzuron, N-(2,3-Dihydro-3-methyl-1,3-thiazol-2-ylidene)-2,4-xylidine, Dinobuton, Dinocap, Diofenolan, DPX-062, Emamectin-Benzoate (MK-244), Endosulfan, Ethiprole (Sulfethiprole), Ethofenprox, Etoxazole (Y1-5301), Fenazaquin, Fenoxycarb, Fipronil, Fluazuron, Flumite (Flufenzine, SZI-121), 2-Fluoro-5-(4-(4-ethoxyphenyl)-4-methyl-1-pentyl)diphenylether (MTI 800), Granulose- und Kempolyederviren, Fenpyroximate, Fenthiocarb, Flubenzimine, Flucycloxuron, Flufenoxuron, Flufenprox (ICI-A5683), Fluproxyfen, Gamma-HCH, Halofenozide (RH-0345), Halofenprox (MTI-732), Hexaflumuron (DE_473), Hexythiazox, HOI-9004, Hydramethylnon (AC 217300), Lufenuron, Imidacloprid, Indoxacarb (DPX-MP062), Kanemite (AKD-2023), M-20, MTI-446, Ivermectin, M-020, Methoxyfenozide (Intrepid, RH-2485), Milbemectin, NC-196, Neemgard, Nitenpyram (TI-304), 2-Nitromethyl-4,5-dihydro-6H-thiazin (DS 52618), 2-Nitromethyl-3,4-dihydrothiazol (SD 35651), 2-Nitromethylene-1,2-thiazinan-3-ylcarbamaldehyde (WL108477), Pyriproxyfen (S-71639), NC-196, NC-1111, NNI-9768, Novaluron (MCW-275), OK-9701, OK-9601, OK-9602, Propargite, Pymetrozine, Pyridaben, Pyrimidifen (SU-8801), RH-0345, RH-2485, RYI-210, S-1283, S-1833, SB7242, SI-8601, Silafluorfen, Silomadine (CG-177), Spinosad, SU-9118, Tebufenozide, Tebufenpyrad (MK-239), Teflubenzuron, Tetradifon, Tetrasul, Thiacloprid, Thiocyclam, TI-435, Tolfenpyrad (OMI-88), Triazamate (RH-7988), Triflumuron, Verbutin, Vertalec (Mykotal), YI-5301.

Als literaturbekannte Fungizide, die erfindungsgemäß mit Wachsen kombiniert werden können, sind z.B. folgende Produkte zu nennen:
Aldimorph, Andoprim, Anilazine, Azoxystrobin, Azaconazole, BAS 450F, Benalaxyl, Benodanil, Benomyl, Bethoxazin, Binapacryl, Bion (CGA-245704), Bitertanol, Bromuconazole, Buthiobate, Captafol, Captan, Carbendazim, Carboxin, Carpropamide, CGA 173506, Cymoxanil, Cyprodinil, Cyprofuram, Diflumetorim, Dichlofluanid, Dichlomezin, Diclobutrazol, Diclocymet (S-2900), Diclomezine, Diethofencarb, Difenoconazol (CGA 169374), Difluconazole, Dimethirimol, Dimethomorph, Diniconazole, Dinocap, Dithianon, Dodemorph, Dodine, Edifenfos, Epoxiconazole, Ethirimol, Etridiazol, Famoxadone, (DPX-JE874), Fenarimol, Fenbuconazole, Fenfuram, Fenhexamid, Fenpiclonil, Fenpropidin, Fenpropimorph, Fentinacetate, Fentinhydroxide, Ferimzone (TF164), Fluazinam, Fluobenzimine, Fludioxonil, Flumetover (RPA-403397), Fluquinconazole, Fluorimide, Flusilazole, Flusulfamide, Flutolanil, Flutriafol, Folpet, Fosetylaluminium, Fuberidazole, Furalaxyl, Furconazol, Furametpyr (S-82658), Furmecyclox, Guazatine, Hexaconazole, Imazalil, Imibenconazole, Ipconazole, Iprobenfos, Iprodione, Isoprothiolane, KNF 317, Kresoxim-methyl (BAS-490F), Kupferverbindungen wie Cu-oxychlorid, Oxine-Cu, Cu-oxide, Mancozeb, Maneb, Mepanipyrim (KIF 3535), Mepronil, Metalaxyl, Metalaxyl-M (CGA-329351), Metconazole, Methasutfocarb, Methfuroxam, Metominofen (SSF-126), Metominostrobin (Fenominostrobin, SSF-126), MON 24000, MON-6550, MON-41100, Myclobutanil, Nabam, Nitrothalisopropyl, Nuarimol, Ofurace, OK-9601, OK-9603, Oxadixyl, Oxycarboxin, Paclobutrazol, Penconazol, Pencycuron, PP 969, Polyoxins, Probenazole, Propineb, Prochloraz, Procymidon, Propamocarb, Propiconazol, Prothiocarb, Pyracarbolid, Pyrazophos, Pyrifenox, Pyrimethanil, Pyroquilon, Quinoxyfen (DE-795), Rabenzazole, RH-7592, RH-7281, Schwefel, Spiroxamine, SSF-109, Tebuconazole, Tetraconazole, TTF 167, Thiabendazole, Thicyofen, Thifluzamide (RH-130753), Thiofanatemethyl, Thiram, TM-402, Tolclofos-methyl, Tolylfluanid, Triadimefon, Triadimenol, Triazoxide, Trichoderma harzianum(DHF-471), Tricyclazole, Tridemorph, Triforine, Triflumizole (UCC-A815), Triticonazole, Uniconazole, Validamycin, Vinchlozolin, XRD 563, Zineb, Natriumdodecylsulfonate, Natrium-dodecyl-sulfat, Natrium-C13/C15-alkohol-ethersulfonat, Natrium-cetostearyl-phosphatester, Dioctylnatrium-sulfosuccinat, Natrium-isopropyl-naphthalenesulfonat, Natriummethytenebisnaphthalene-sulfonat, Cetyl-trimethyl-ammoniumchlorid, Salze von langkettigen primären, sekundären oder teritären Aminen, Alkyl-propyleneamine, Lauryl-pyrimidiniumbromid, ethoxylierte quarternierte Fettamine, Alkyl-dimethylbenzyl-ammoniumchlorid und 1-Hydroxyethyl-2-alkyl-imidazolin.

Die oben genannten Kombinationspartner stellen bekannte Wirkstoffe dar, die zum großen Teil in C.D.S. Tomlin, S.B. Walker, The Pesticide Manual, 11. Auflage (1997), British Crop Protection Council beschrieben sind.

Als Kombinationspartner für die Wachse sind beispielsweise bekannte Wirkstoffe einsetzbar, wie sie in Weed Research 26, 441-445 (1986), oder "The Pesticide Manual", 10th edition, The British Crop Protection Council and the Royal Soc. of Chemistry, 1994 und dort zitierter Literatur beschrieben sind. Als literaturbekannte Herbizide, die mit den Wachsen kombiniert werden können, sind folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy)-2-nitrophenyl]-2-methoxyethylidene)-amino)-oxy]-essigsäure und -essigsäuremethylester, alachlor; alioxydim; ametryn; amidosulfuron; amitrol; AMS, d.h. Ammoniumsulfamat; anilofos; asulam; atrazin; azimsulfurone (DPX-A8947); aziprotryn; barban: BAS 516 H, d.h. 5-Fluor-2-phenyl-4H-3,1-benzoxazin-4-on; benazolin; benfluralin; benfuresate; bensulfuronmethyl; bensulide; bentazone; benzofenap; benzofluor, benzoylprop-ethyl; benzthiazuron; bialaphos; bifenox; bromacil; bromobutide; bromofenoxim; bromoxynil; bromuron; buminafos; busoxinone; butachlor; butamifos; butenachlor; buthidazole; butralin; butylate; cafenstrole (CH-900); carbetamide; cafentrazone (ICI-A0051); CDAA, d.h. 2-Chlor-N,N-di-2-propenylacetamid; CDEC, d.h. Diethyldithiocarbaminsäure-2-chiorallylester; chlomethoxyfen; chloramben; chlorazifop-butyl, chlormesulon (ICI-A0051); chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthal-dimethyl; clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-DB; dalapon; desmedipham; desmetryn; di-allate; dicamba; dichlobenil; dichlorprop; diclofop und dessen Ester wie diclofop-methyl; diethatyl; difenoxuron; difenzoquat; diflufenican; dimefuron; dimethachlor; dimethametryn; dimethenamid (SAN-582H); dimethazone; clomazon; dimethipin; dimetrasulfuron; dinitramine; dinoseb; dinoterb; diphenamid; dipropetryn; diquat; dithiopyr; diuron; DNOC; eglinazine-ethyl; EL 77, d.h. 5-Cyano-1-(1,1-dimethylethyl)-N-methyl-1Hpyrazole-4-carboxamid; endothal; EPTC; esprocarb; ethalfluralin; ethametsulfuron-methyl; ethidimuron; ethiozin; ethofumesate; F5231,d.h. N-[2-Chlor-4-fluor-5-[4-(3-fluorpropyl)-4,5-dihydro-5-oxo-1H-tetrazol-1-yl]-phenyl]-ethansulfonamid; ethoxyfen und dessen Ester (z.B. Ethylester, HN-252); etobenzanid (HW 52); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; fluazifop und fluazifop-P und deren Ester, z.B. fluazifop-butyl und fluazifop-P-butyl; fluchloralin; flumetsulam; flumeturon; flumiclorac und dessen Ester (z.B. Pentylester, S-23031 ); flumioxazin (S-482); flumipropyn; flupoxam (KNW-739); fluorodifen; fluoroglycofen-ethyl; flupropacil (UBIC-4243); fluridone; flurochloridone; fluroxypyr, flurtamone; fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen ester; hexazinone; imazamethabenz-methyl; imazapyr; imazaquin und Salze wie das Ammoniumsalz; imazethamethapyr; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metabenzuron; methobenzuron; metobromuron; metolachlor; metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyt]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxyfluorfen; paraquat; pebulate; pendimethalin; perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor, propanil; propaquizafop und dessen Ester, propazine; propham; propisochlor; propyzamide; prosulfalin; prosulfocarb; prosulfuron (CGA-152005); prynachlor, pyrazolynate; pyrazon; pyrazosulfuron-ethyl; pyrazoxyfen; pyridate; pyrithiobac (KIH-2031 ); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und -methylester, sulfentrazon (FMC-97285, F-6285); sulfazuron; sulfometuron-methyl; sulfosate (ICI-A0224); TCA; tebutam (GCP-5544); tebuthiuron; terbacil; terbucarb; terbuchlor-, terbumeton; terbuthylazine; terbutryn; TFH 450; d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-24085); thifensulfuronmethyl; thiobencarb; tiocarbazil; tralkoxydim; tri-allate; triasulfuron; triazofenamide; tribenuron-methyl; triclopyr, tridiphane; trietazine; trifluralin; triflusulfuron und Ester (z.B. Methylester, DPX-66037); trimeturon; tsitodef; vemolate; WL 110547, d.h. 5-Phenoxy-1-[3-(trifluormethyl)-phenyl]-1H-tetrazol; UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127 und KIH-2023.
Wachse sind bekannte Stoffe natürlichen oder synthetischen Ursprungs wie sie z.B. in Ullmann's Encyclopedia of Industrial Chemistry Vol. A 28, 103 beschrieben sind. Sie stellen chemische Stoffgemische dar, die üblicherweise z.B. durch Viskosität und Säurezahl definiert sind. Reine KohlenwasserstoffWachse enthalten keine funktionellen Gruppen, besitzen daher die Säurezahl 0. Ihr Viskositätsbereich kann zwischen 5 mPas (bei 100°C) und 30000 mPas (bei 140°C) liegen.

Bevorzugt sind Wachse, deren Säurezahl von 0 - 150 und deren Viskosität zwischen 5 mPas und 2000 mPas (bei 170°C) liegt. Als Beispiele seien hier genannt: Polyethylenwachse (Homo oder Copolymere) die nach dem Zieglerverfahren oder Hochdruckverfahren hergestellt werden oder Polypropylenaufbauwachse oder Polypropylenabbauwachse.

Besonders bevorzugt sind die Wachse, die durch ihre Säurezahl 5 -150 über Carboxylgruppen und gegebenenfalls weitere polare funktionelle Gruppen verfügen und Viskositäten von 5 mPas - 2000 mPas (bei 170°C) aufweisen.

Ganz besonders bevorzugt sind Wachse deren Säurezahl 5 - 150 und deren Viskosität 5 - 300 mPas beträgt oder solche, deren Säurezahl 15 - 60 und deren Viskosität 150 (bei 100 C) - 5000 mPas (bei 120°C) beträgt.

Als Beispiele seien genannt: Montanwachssäuren, deren Seifen ein- und mehrwertiger Kationen und Montanwachsester von ein- und mehrwertigen Alkoholen, Carnaubawachs, Gandelillawachs, Zuckerrohrwachs, Torfwachs, nach verschiedenen Verfahren oxidierte bzw. gepfropfte Kohlenwasserstoffverbindungen.

Ein weiterer Gegenstand der Erfindung sind die Verfahren zur Herstellung der vorgenannten Mischungen. Das gemahlene Wachs mit einer Korngröße von weniger als 100 µm und einem d50-Wert (d50 = Medianwert der Kornverteilung) von 5 - 30 µm wird mit dem Wirkstoff in geeigneter Form gemischt und in eine entsprechende Formulierung eingebracht. Ein bevorzugtes Verfahren besteht darin, den Wirkstoff mit dem Wachs in fester Form, gegebenenfalls gemahlen oder feinst gemahlen mit Kornverteilungen im Bereich < 40 µm und d50-Werten von 3 - 15 µm, oder mit der Schmelze mit Hilfe eines Mischers zu beschichten und dieses Material wie für den reinen Wirkstoff üblich in eine applizierbare Formulierung zu überführen.

Die Beschichtung des Wirkstoffs mit Wachs kann jedoch auch durch Dispergieren in einer Wachsdispersion erfolgen, wobei durch Zusatz geeigneter Hilfsstoffe (wie z.B. CaCl₂-Lösung, verdünnte Säuren) sich das fein verteilte Wachs auf den Wirkstoff niederschlägt.

Ein weiterhin bevorzugtes Verfahren zur Herstellung der Mischungen besteht darin, daß man formulierte Pflanzenbehandlungsmittel, z.B. ein EC (emulgierbares Konzentrat) mit einem Wachs behandelt oder durch Zufügen einer verträglichen Wachsdispersion die gewünschte Menge Wachs zusetzt, und gegebenenfalls durch Erhitzen eine stabile Zubereitung herstellt.

Ein besonders bevorzugtes Verfahren zur Herstellung der erfindungsgemäßen Mischungen besteht darin, zunächst eine anwendungsfertige Spritzbrühe der Pflanzenbehandlungsmittel in Wasser herzustellen und dann die gewünschte Menge einer Wachsdispersion zuzufügen. Dabei kann die Reihenfolge der Zugabe variiert werden, gegebenenfalls kann eine Vorverdünnung der Wachsdispersion und/oder des formulierten Pflanzenbehandlungsmittels zur Vermeidung von Ausflockungen notwendig sein.

Die Anwendungskonzentrationen der Pflanzenbehandlungsmittel sind durch die Wirksamkeit der Aktivsubstanz und deren zugelassene Einsatzmengen vorgegeben. Die zugesetzten Mengen Wachs, als Festkörper bezeichnet, können in weiten Grenzen variiert werden. Sie sind abhängig vom Wirkstoff des Pflanzenbehandlungsmittels sowie der Art des gewünschten Effektes. Sie liegen im Bereich von 5 g/ha bis 4 kg/ha Wachs, bevorzugt sind 5 g/ha bis 1 kg/ha Wachs, besonders bevorzugt sind 10 g/ha bis 0,5 kg/ha Wachs.

Ein weiterer Gegenstand der Erfindung ist die Verwendung der erfindungsgemäßen Mischungen als Pflanzenbehandlungsmittel.

### Beispiele:

### Beispiel 1

Man mischt in einem IKA-Laborkneter (V = 500 ml) bei einer Temperatur von 90°C 65 g Goltix VM 90 mit 11,5 g ®Hostalub WE 4 während 1 Stunde. Dabei zieht das Wachs auf den Wirkstoff auf. Analog wurde z.B. Endosulfan behandelt.

### Beispiel 2

Der Wirkstoff wird als feine Partikel in Wasser dispergiert oder emulgiert. Die Wachsdispersion wird zugesetzt, die Dispersion wird durch pH-Wertänderung koaguliert. Im Koagulat sind Wachs und Wirkstoff aneinander gebunden. Wenn der Vorgang kontrolliert durchgeführt wird, kann die Partikelgröße eingestellt werden. Sonst wird naß gemahlen und formuliert und getrocknet.
Das Verfahren kann eingesetzt werden, wenn der Wirkstoff gegen Wasser und Alkalien/Säuren nicht sehr empfindlich ist. Ist der Wirkstoff basisch, so kann durch Zusatz einer kationischen Dispersion die Fällung direkt herbeigeführt werden. Ist der Wirkstoff sauer, so kann mit einer anionischen Dispersion die Fällung herbeigeführt werden.
Wachsmenge und Wirkstoffmenge können beliebig aufeinander eingestellt werden, wenn die Fällungsbedingungen herbeigeführt werden können.
Das getrocknete Produkt muß für die Einstellung der Redispergierbarkeit noch formuliert werden.
Auf diese Weise wurde z.B. Goltix VM 90 aus Dispersion 04 mit 5, 10, 15 und 20 Gew.-% Wachs gecoatet.

### Beispiel 3

Man löst in 95 g ®Corbel (EC) 5 g Montansäurepolyglykolester unter gelindem Erwärmen auf. Die so erhaltene Kombination ist wie üblich mit Wasser in die empfohlene Anwendungskonzentration zu bringen.

### Beispiel 4

15,0 g Montanwachssäuren (SZ = 140) + 4,5 g Sapogenat T 500 werden bei 105 °C geschmolzen. Die Schmelze wird unter Rühren im dünnen Strahl in 58,5 g siedendes Trinkwasser gegossen. Dann werden 22,0 g ®Thiodan 35 kalt zugesetzt. Die Mischung wird aufgekocht und rasch im Wasserbad unter Rühren abgekühlt. Die so erhaltene wachshaltige Dispersion, in der üblichen Aufwandmenge eingesetzt, zeigte gegen Heliothis virescens Larven auf Baumwolle eine deutlich verbesserte Dauerwirkung als Thiodan 35. Analog kann Montanwachssäuren in ®Desgan oder ®Brestan eingearbeitet werden.

### Beispiel 5

Man stellt zunächst die verwendungsfähige Spritzbrühe des Pflanzenbehandlungsmittels in der entsprechenden Menge Wasser her und fügt anschließend die zum Erzielen des gewünschten Effektes notwendige Menge der Dispersion 02 zu, die wie folgt erhalten wurde: 29,2 g Wachs LP wird mit 5,80 g Sapogenat T 500 bei 105 °C geschmolzen und unter Rühren in siedendes Trinkwasser eingegossen. Man kocht auf und kühlt im Wasserbad unter Rühren ab.

### Beispiel 6

Man versetzt in einer Trommel 100 g in bekannter Weise mit ®Landor gebeizten Weizen mit 3 g der Dispersion 02, die durch verdünnen mit Wasser auf 10 % Festkörper eingestellt wurde, mischt 10 min. nach und läßt trocknen. Die so auf dem Weizenkom erzeugte Dicke der Wachsschicht beträgt ca. 3 µm.

### Beispiel 7

Auf einer PE-Folie wird ®Corbel ohne und mit Wachsdispersionszusatz aufgebracht, antrocknen gelassen und FTIR-spektroskopisch die Abnahme des Gehalts an Wirkstoff Fenpropimorph verfolgt. Beispielsweise zeigen die Kombinationen mit den Dispersionen 01 bzw. 02 eine deutlich reduzierte Flüchtigkeit von Fenpropimorph, während ohne Wachs nach 4 Tagen (23°C, 60 % Luftfeuchte) noch 50 % Wirkstoff nachgewiesen wurden, ist bei Zusatz von (1 kg/ha Wachs) als Dispersion 01 bzw. Dispersion 02 noch 85 bzw. 83 % Wirkstoff vorhanden.

### Beispiel 8

Man verdünnt die Dispersion 04 auf nahezu gewünschte Endkonzentration des Wachses ( 0,5 kg Wachs pro Hektar) in der Spritzbrühe, gibt unter Rühren ebenfalls mit Wasser verdünntes Pflanzenbehandlungsmittel zu und verdünnt schließlich auf Endkonzentration. Mit ®Folicur oder ®Corbel wurde bei Applikation in Weizen eine deutliche Reduktion der Phytotoxizität insbesondere bei höheren Konzentration der Fungizide beobachtet.

### Beispiel 9 (Herbizidversuch)

Am nicht resistenten Mais (Standort Wolfsthal, Österreich) wurden ®Basta und ®Roundup allein und in Kombination mit Wachsen angewendet. Eine deutlich verbesserte Anfangswirkung gegen Dikotyle wird bei Roundup erreicht durch Zusatz z.B. der Dispersionen 01, 02, 03. Für beide Herbizide wird eine deutlich bessere Dauerwirkung durch Zusatz z.B. der Dispersionen 01, 02 oder 03 erreicht.

### Beispiel 10 (Fungizidversuch)

Winterweizen (Sorte Monopol, Standort Altenlengbuch, Österreich) wurde mit den Fungiziden ®Amistar bzw. ®Juwef in empfohlener Aufwandmenge mit und ohne Wachszusatz (1 kg/ha) einmal (5. Mai 98) im Stadium 31-32 behandelt, gegen unbehandelte Parzellen verglichen und der Befall an Erysiphe graminis bonitiert. Die Kombination von Amistar bzw. Juwel und Dispersion 02 z.B. zeigte am 15.6. keinen Befall von Mehltau; unbehandelt 10 %, Amistar 8 % und Juwel 7 % Befall. Auch eine Doppelbehandlung Amistar bzw. Juwel erreichte nicht die niedrigen Befallswerte der Wachskombinationen.

### Beispiel 11

Bekämpfung von Phytophthora infestans in Kartoffel (Sorte Quarta, Freiland) Man stellt analog Beispiel 5 eine Kombination aus ®Shirlane und der jeweiligen Wachsdispersion her und appliziert wie üblich. Die Anzahl der Spritzungen und der Spritzintervalle wurden von der Landesanstalt vorgegeben. Eine Spritzung wird dann veranlaßt, wenn Witterung und andere Parameter Infektion ermöglichen.
®Shirlane zeigte eine gute Wirkung. Zur Krautwelke wurde 30 % Befall festgestellt. Kombinationen von Shirlane mit den Wachsemulsionen 01, 02, 03 zum gleichen Zeitpunkt ausgebracht zeigten eine verbesserte Wirkung, die sich in einem bis zu 50 % geringeren Befall mit Phytophthora darstellt. Bei geringerem Befall ist ein signifikanter Unterschied zwischen den einzelnen Wachsdispersionen nicht gegeben. Auffällig ist aber die Konsistenz der Wirkung. Die mit Wachsemulsionen behandelten Streifen zeigten bis zum Abschlegeln des Kartoffelkrauts ein gesünderes Aussehen, während der gesamte Bestand eine früher einsetzende Welke zeigte.

### Beispiel 12

Analog Beispiel 10 wurden an Winterweizen (Sorte Monopol, Standort Paar, D) Versuche mit ®Juwel, ®Opus Top und ®Bion mit und ohne Wachs angelegt und ausgewertet. Die Kombination der Fungizide mit z.B. Dispersion 02 (1 kg/ha Wachs) reduzierte den Befall gegenüber den Fungiziden ®Juwel und ®Opus Top allein bei Erysiphe graminis und Septoria nodorum deutlich. Die Ernteerträge waren bei Einsatz der Mischungen mit Wachs bis zu 40 % höher im Vergleich zu unbehandelt und bis zu 32 % höher im Vergleich zur Fungizidbehandlung ohne Wachs.

### Beispiel 13

### Dispersion 01

25 g Montanwachsester + 5 g Wachsemulgator 4106 bei ca. 105°C schmelzen, 69,9 g siedendes Trinkwasser portionsweise in die Schmelze einrühren. Emulsion aufkochen, dann im Wasserbad rasch auf Raumtemperatur kühlen. 0,1g Konservierungsmittel SANIPROT 94-08* zusetzen und verdampftes Wasser ergänzen.
*Lieferant: Fa. SANITIZED AG

### Beispiel 14

### Dispersion 02

25 g Montanwachssäure + 5 g Sapogenat T 500 bei ca. 105°C schmelzen, 69,9 g siedendes Trinkwasser portionsweise in die Schmelze einrühren. Emulsion kurz aufkochen, dann im Wasserbad rasch auf Raumtemperatur kühlen. 0,1g Konservierungsmittel SANIPROT 94-08 zusetzen und verdampftes Wasser ergänzen.

### Beispiel 15

### Dispersion 03

25 g Montanwachsester bei ca. 105°C schmelzen, 45 g entsalztes Wasser zum Sieden bringen und portionsweise in die Wachsschmelze einrühren. Emulsion kurz aufkochen, Heizung abstellen, dann 29,9 g kaltes, entsalztes Wasser einrühren, Emulsion im Wasserbad rasch auf Raumtemperatur kühlen. 0,1 g Konservierungsmittel SANIPROT 94-08 zusetzen und verdampftes Wasser ergänzen.

### Beispiel 16

### Dispersion 04

20 g Montanwachsester + 5 g Emulgator S 3267/3 bei ca. 110 - 115°C schmelzen, 0,6 g Eisessig zusetzen, Schmelze in zügigem Strahl in 74,3 g siedendes Trinkwasser einrühren. Emulsion kurz aufkochen, dann im Wasserbad rasch auf Raumtemperatur kühlen. 0,1 g Konservierungsmittel SANIPROT 94-08 zusetzen und verdampftes Wasser ergänzen.

### Beispiel 17

### Dispersion 05

25 g Montanwachsester + 5 g Wachsemulgator 4106 bei ca. 105°C schmelzen, 69,9 g siedendes Trinkwasser portionsweise in die Schmelze einrühren. Emulsion kurz aufkochen, dann im Wasserbad rasch auf Raumtemperatur kühlen. 0,1 g Konservierungsmittel SANIPROT 94-08 zusetzen und verdampftes Wasser ergänzen.

### Beispiel 18

### Dispersion 06

320 g Wachsoxidat mit SZ = 17; 60 g Genapol T 250; 20 g Genapol T 500; 2 g Natriumsulfit werden zusammen mit 597 g Trinkwasser in den 1 - Liter-Autoklav gefüllt. Innerhalb von 30 min wird unter Rühren mittels Ankerrührer die Innentemperatur des Kessels auf 140-145 °C gebracht. Dann wird 20 min lang bei gleicher Temperatur und gleicher Rührgeschwindigkeit emulgiert, anschließend innerhalb von 40 min auf ca. 30°C abgekühlt. In die kalte Dispersion wird 1 g Konservierungsmittel SANIPROT 94-08 eingerührt.

### Beispiel 19

### Dispersion 07

### Teil I

273 g Wachsoxidat mit SZ = 25; 68 g Emulgator Synperonic 13/12*; 2 g Natriumpyrosulfit (=Na₂S₂O₅) und 7 g Kaliumhydroxid, 86%ig (=Ätzkali) werden zusammen mit 649 g entsalztem Wasser in den 1 - Liter-Autoklav gefüllt. Innerhalb von 30 min wird unter Rühren mittels Ankerrührer die Innentemperatur des Kessels auf 130°C gebracht. Dann wird 20 min lang bei gleicher Temperatur und gleicher Rührgeschwindigkeit emulgiert, anschließend innerhalb 40 min auf ca. 30°C abgekühlt. In die kalte Dispersion wird 1 g Konservierungs-mittel SANIPROT 94-08 eingerührt.
*Lieferant: Fa. ICl, Essen

### Teil II

33,7 g der nach Teil I hergestellten Dispersion werden mit 33,5 g Trinkwasser verdünnt, dann 32,8 g Dispersion 03 zugesetzt und umgerührt. Der Festkörper der Mischung beträgt 20 %.

### Beispiel 20

### Dispersion 08

### Teil I

24,4 g Montanwachs und 4,9 g Wachsemulgator 4106 werden bei ca. 110-115°C geschmolzen. Die Schmelze wird mit 43 %iger Kalilauge verseift. Die verseifte Schmelze wird unter mechanischem Rühren in dünnem Strahl in 69,2 g siedendes, entsalztes Wasser eingerührt, kurz aufgekocht und rasch im Wasserbad gekühlt. Die Emulsion wird mit 0,1 g Konservierungsmittel SANIPROT 94-08 stabilisiert, der Wasserverlust ergänzt.

### Teil II

38,7 g der nach Teil I hergestellten Dispersion werden mit 27,7 g Trinkwasser verdünnt, dann 33,6 g Dispersion 03 zugesetzt und umgerührt. Der Festkörper der Mischung beträgt 20 %.

## Patentansprüche

1. Mischung von Pflanzenbehandlungsmitteln mit einem oder mehreren Wachsen, **dadurch gekennzeichnet, daß** die Wachse eine Säurezahl von 5 - 150 und eine Viskosität von 5 mPas (bei 100 °C) bis 2000 mPas (bei 170 °C) haben und die Mischungen frei von terpenhaltigen Stoffen sind.

2. Mischung nach Anspruch 1, **dadurch gekennzeichnet, daß** die Wachse eine Säurezahl von 5 - 150 und eine Viskosität von 5 - 300 mPas (bei 100 °C) haben.

3. Mischung nach Anspruch 1, **dadurch gekennzeichnet, daß** die Wachse eine Säurezahl von 15 - 60 und eine Viskosität von 150 - 5000 mPas (bei 140 °C) haben.

4. Verfahren zur Herstellung von Mischungen nach den Ansprüchen 1 bis 3, **dadurch gekennzeichnet, daß** man den Wirkstoff mit dem Wachs in fester Form oder in der Schmelze kombiniert und dann in eine entsprechende Formulierung bringt.

5. Verfahren zur Herstellung von Mischungen nach den Ansprüchen 1 bis 3, **dadurch gekennzeichnet, daß** man den Wirkstoff mit einem Wachs, das feinst gemahlen vorliegt und durch Korngröße < 100 µm und d50 von 5 µm - 50 µm charakterisiert ist, kombiniert und dann in eine entsprechende Formulierung bringt.

6. Verfahren zur Herstellung von Mischungen nach den Ansprüchen 1 bis 3, **dadurch gekennzeichnet, daß** man den Wirkstoff mit einer Wachsdispersion behandelt und dann in eine entsprechende Formulierung bringt.

7. Verfahren zur Herstellung von Mischungen nach den Ansprüchen 1 bis 3, **dadurch gekennzeichnet, daß** man formulierte Pflanzenbehandlungsmittel mit Wachsen oder Wachsdispersionen kombiniert.

8. Verfahren zur Herstellung von Mischungen nach den Ansprüchen 1 bis 3, **dadurch gekennzeichnet, daß** man anwendungsfertige Spritzbrühen mit Wachsdispersionen versetzt.

9. Verwendung von Mischungen nach den Ansprüchen 1 bis 3 als Pflanzenbehandlungsmittel.

## Claims

1. A mixture of plant treatment compositions with one or more waxes, wherein the waxes have an acid number of 5 - 150 and a viscosity of 5 mPas (at 100°C) to 2000 mPas (at 170 °C), and the mixture is free of terpene-containing substances.

2. A mixture as claimed in claim 1, wherein the waxes have an acid number of 5 - 150 and a viscosity of 5 - 300 mPas (at 100°C).

3. A mixture as claimed in claim 1, wherein the waxes have an acid number of 15 - 60 and a viscosity of 150 - 5000 mPas (at 140°C).

4. A process for the preparation of mixtures as claimed in any of claims 1 to 3, which comprises combining the active substance with the wax in solid form or in the melt and then bringing the mixture into a suitable formulation.

5. A process for the preparation of mixtures as claimed in any of claims 1 to 3, wherein the active substance is combined with a wax which has been finely ground and is **characterized by** a particle size of < 100 µm and a d50 of 5 µm - 50 µm and then bringing the mixture into a suitable formulation.

6. A process for the preparation of mixtures as claimed in any of claims 1 to 3, wherein the active substance is treated with a wax dispersion and the mixture is then brought into a suitable formulation.

7. A process for the preparation of mixtures as claimed in any of claims 1 to 3, wherein formulated plant treatment compositions are combined with waxes or wax dispersions.

8. A process for the preparation of mixtures as claimed in any of claims 1 to 3, wherein the ready-to-use spray mixtures are treated with wax dispersions.

9. The use of mixtures as claimed in any of claims 1 to 3 as plant treatment compositions.

## Revendications

1. Mélange d'agents phytosanitaires avec une ou plusieurs cires, **caractérisé en ce que** les cires présentent un indice d'acide de 5 à 150 et une viscosité de 5 mPas (à 100°C) à 2000 mPas (à 170°C) et les mélanges sont exempts de matières renfermant des terpènes.

2. Mélange selon la revendication 1, **caractérisé en ce que** les cires présentent un indice d'acide de 5 à 150 et une viscosité de 5 à 300 mPas (à 100°C).

3. Mélange selon la revendication 1, **caractérisé en ce que** les cires présentent un indice d'acide de 15 à 60 et une viscosité de 150 à 5000 mPas (à 140°C).

4. Procédé pour la préparation de mélanges selon les revendications 1 à 3, **caractérisé en ce qu'**on combine la substance active avec la cire sous forme solide ou en fusion et ensuite on réalise une formulation correspondante.

5. Procédé pour la préparation de mélanges selon les revendications 1 à 3, **caractérisé en ce qu'**on combine la substance active avec une cire qui se présente sous forme finement broyée et est **caractérisée par** une taille de particules <100 µm et un d50 de 5 µm à 50 µm, et ensuite on réalise une formulation correspondante.

6. Procédé pour la préparation de mélanges selon les revendications 1 à 3, **caractérisé en ce que** la substance active est traitée par une dispersion de cire et ensuite on réalise une formulation correspondante.

7. Procédé pour la préparation de mélanges selon les revendications 1 à 3, **caractérisé en ce qu'**on combine les agents phytosanitaires formulés avec des cires ou dispersions de cires.

8. Procédé pour la préparation de mélanges selon les revendications 1 à 3, **caractérisé en ce qu'**on ajoute des dispersions de cire aux bouillies pulvérisables prêtes à l'emploi.

9. Utilisation de mélanges selon les revendications 1 à 3, en tant qu'agents phytosanitaires.
